# EUROPEAN PATENT APPLICATION

(11) **EP 4 306 851 A1**
(43) Date of publication of application: **17.01.2024**
(21) Application number: 22798985.2
(22) Date of filing: 07.03.2022
(51) Int. Cl.: F23D 14/58, F23D 14/12

(54) **PORTABLE GAS BURNER**

(30) Priority: 06.05.2021 KR 20210058707
(71) Applicant: Lee, Jangkeun, Seongnam-si, Gyeonggi-do 13597 (KR)
(72) Inventor: Lee, Jangkeun, Seongnam-si, Gyeonggi-do 13597 (KR)
(74) Representative: Laddé, Jurre Gerard
(86) International application number: PCT/KR2022/003181
(87) International publication number: WO 2022/234939

(57) **Abstract**

The present invention relates to a portable gas burner. It includes a first tube that forms a fuel passage into which fuel is injected, and an ignition device placed on the inner side of the second tube, which is connected to or surrounds the first tube, and is constructed in a tubular shape with openings at both ends where the first and second tubes communicate with each other. The first tube is openended, and the second tube is constructed to surround the second end of the first tube. An ignition device is placed on the inner side of the third tube, which communicates with the first tube's first end and ignites the fuel flowing in from the first tube, creating a combustion zone.

## Description

### TECHNICAL FIELD

This invention relates to a portable gas burner comprising an ignition device inside.

### TECHNICAL BACKGROUND

Generally, portable gas burners are used by placing a pot or similar item on top of the main body and igniting the gas.

Specifically, a burner body is positioned at the center of the case, forming a fire source. On top of the burner body, there is a grill or pot, and a gas cylinder mounting part that can detach the butane gas cylinder through lever operation is provided.

Furthermore, it operates by manipulating the fuel supply/ignition switch located on the front of the gas cylinder mounting part to supply fuel from the butane gas cylinder and generate piezoelectric electricity, which simultaneously ignites the fuel and emits it into the fire while igniting the flame.

However, such portable gas burners are somewhat large and heavy for portable use, and there is also the inconvenience of requiring additional tools such as pots, kettles, or grills. Additionally, these portable gas burners are made of metal materials that can withstand the flames, making them heavy, and it is rare for methods to be adopted to fold them for miniaturization.

Especially in the case of camping or hiking where other luggage is often carried, miniaturization and lightweight are essential for camping equipment or hiking equipment.

Furthermore, when hiking, there was inconvenience in having to equip a portable gas burner with a stove for heating water needed for beverages or for cooking instant noodles or military rations that require boiling water simultaneously.

To reduce these problems, non-combustible cooking methods exist. However, disposable heat packs used in such methods have disadvantages such as: i) generating disposable waste, ii) being more expensive than items like butane gas, iii) generating a limited amount of heat, which is only enough to heat food that has already been cooked. For example, when using a heat pack to cook instant noodles, the cooking time is over 15 minutes due to the limitation of instant heat generation, and in such cases, the noodles become soggy and cannot be properly cooked.

On the other hand, in the case of backpacking, multiple heat packs are often used, increasing both weight and volume.

On the other hand, there have also been submerged burners used by immersing them in liquids such as water and then igniting a flame.

However, submerged heaters inevitably require that both the intake and exhaust are directed toward the surface of the liquid. Specifically, for combustion, the intake and exhaust gases must move from the surface of the liquid to below it and then rise above it for exhaust after combustion.

But when combustion occurs in the portion submerged in the liquid, hot gas is generated due to the heat of combustion gas. Accordingly, the problem may arise that the intake must circulate against the buoyancy of the hot gas generated.

On the other hand, for the purpose of heating small containers, such as a 150ml paper cup, the size of the submerged portion may be limited. Therefore, there may be limitations in the thickness of the intake, gas passage, and exhaust of the submerged burner. Due to such limitations in the thickness of the intake, gas passage, and exhaust, the amount of air that can be sucked in may be limited.

Therefore, there is an increasing need for a portable gas burner that can address the above-mentioned problems.

### CONTENT OF THE INVENTION

### Problem to solve

The present invention aims to provide a portable and convenient immersion-type burner.

### Means for solving the problem

According to one aspect of the present invention, the portable gas burner includes a first tube in which fuel is first injected and an ignition device that ignites the combustion of the injected fuel on the inner side of the other end. A second tube is connected to the first tube or arranged to surround the first tube, and the first and second tubes are formed in a tubular shape such that the first end and the other end communicate. The first end is open, and the other end is formed to surround the other end of the second tube, and a combustion section where the fuel injected from the first end of the first tube is ignited can be formed on the inner side of the other end of the third tube.

According to one aspect of the present invention, in the portable gas burner, the fuel is injected in a gaseous form, and in the first tube, a first opening that allows external air to flow into the first tube and mix with the fuel injected from the first end may be formed adjacent to the first end.

According to one aspect of the present invention, in the portable gas burner, the first opening may be formed to be spaced apart from the first end of the second tube.

To adjust the flow rate of the gas injected into the first tube in the portable gas burner according to one aspect of the present invention, a flow rate control unit that adjusts the inner diameter of the tube that is connected to the fuel injection unit of the first tube and is disposed at the fuel injection unit of the first tube may be further included.

According to one aspect of the present invention, in the portable gas burner, the flow rate control unit may be configured to adjust the flow rate of the gas that flows into the first tube through the first opening by reducing the internal pressure of the first tube to below atmospheric pressure so that external air flows into the first tube through the first opening.

According to one aspect of the present invention, in the portable gas burner, the other end of the first tube may be formed shorter than the other end of the second tube.

According to one aspect of the present invention, in the portable gas burner, when the fuel discharged from the other end of the first tube is ignited by the ignition device of the first tube, the air introduced from the first end of the first tube may flow into the combustion occurring at the other end of the second tube.

According to one aspect of the present invention, in the portable gas burner, the other end of the third tube may be arranged so that flames ignited by the ignition device of the first tube come into contact and spread in both directions.

According to one aspect of the present invention, in the portable gas burner, the inner space of the third tube may be formed to allow the combustion gas generated in the combustion section to be discharged.

According to one aspect of the present invention, in the portable gas burner, the outer surface of the third tube may include at least one bent portion to increase the contact area with the outside.

According to one aspect of the present invention, in the portable gas burner, the distance between the outer diameter of the first tube and the inner diameter of the second tube may be 1 mm or more and 20 mm or less.

According to one aspect of the present invention, in the portable gas burner, the distance between the first end of the first tube and the first end of the second tube may be 20 mm or more and 40 mm or less.

According to one aspect of the present invention, in the portable gas burner, the second tube may include a shield protruding from the outer side of the second tube and covering the other end of the third tube.

According to one aspect of the present invention, in the portable gas burner, baffle may be disposed at the other end of the third tube, a baffle blocking the other end of the third tube and protruding upward to form a space through which combustion gas is discharged.

According to one aspect of the present invention, in the portable gas burner, the outer side of the third tube may include at least one bent portion to increase the contact area with the outside.

According to one aspect of the present invention, in the portable gas burner, the other end of the third tube may be arranged to be supported on the ground so that the third tube is supported against the ground, and the other end of the third tube may extend to the ground.

According to one aspect of the present invention, in the portable gas burner, the other end of the second tube may include a discharge portion that becomes narrower as it goes toward the other end, and the other end of the third tube may be formed so that the inner side rises toward the outer diameter side of the third tube as flames flow in from the other end of the first tube and are introduced into the combustion section.

According to one aspect of the present invention, in the portable gas burner, the lower end of the third tube may be curved and extended in a direction perpendicular to the direction extending from the upper end of the third tube.

According to another aspect of the present invention, the portable gas burner includes a fuel injection unit located at the first end for fuel injection, the first tube which houses an ignition device for igniting the injected fuel, and the second tube formed in a tubular shape to facilitate communication between the first and second ends which can either be connected to or arranged to surround the first tube. Additionally, the third tube with an open first end and the other end configured to encircle the other end of the second tube. The third tube includes a partition portion that divides the internal space of the third tube into two or more sections, and the lower part of this partition portion allows communication. In the first space created by the partition, the fuel flowing from the end of the first tube ignites to form a combustion zone, and the resulting combustion gas is then directed to the second space through the communication unit located at the lower part of the compartment.

According to another aspect of the present invention, the portable gas burner includes a first tube with a fuel injection unit formed at one end, an ignition device to ignite the fuel injected, and the first tube is connected to or arranged to encircle it. There's a second tube formed in a tubular shape that either connects to or surrounds the first tube and allows communication between one end and the other end. Furthermore, a third tube is included, which has an open end at the side top, allowing the second tube to penetrate, and the second tube, originating from the first end, extends through the side of the third tube towards the other end of the third tube.

According to another aspect of the present invention, in the portable gas burner, the second tube includes a first body connected to the first tube, a second body that penetrates through the opening of the third tube, and a third body that connects the first body and the second body, and the third body can be made to have elasticity.

According to one aspect of the present invention, a clamp unit that connects the first tube and the second tube is further included in the portable gas burner, and the clamp unit may include a first clamp that is fixed to the first tube and a second clamp that is coupled to the first clamp and is fixedly coupled to the second tube.

According to another aspect of the present invention, the first clamp in the portable gas burner includes a clip part, and the clip parts receive forces in opposite directions and move, creating first and second clips to secure the internal space, and the height of the second clamp may be longer than the height of the first clamp.

According to another aspect of the present invention, the second clamp in the portable gas burner can be fixed to the shield formed in the second tube.

According to another aspect of the present invention, a holder that fits between the first tube and the second tube is further included in the portable gas burner, and on the outer surface of the first tube, a first groove is formed where the rear end of the holder is fitted, and on the inner surface of the second tube, a second groove can be formed where the front end of the holder is fitted.

### Effects of the invention

According to one embodiment of the present invention, the portable gas burner is compact, highly portable, and capable of generating a sufficient amount of heat to boil a substantial amount of water due to continuous fuel supply and high flame temperature. Additionally, there is an advantage of being able to use the invention in lightweight silicone containers, as the containers do not necessarily have to be made of metal. Furthermore, foldable silicone containers can maximize portability when used with the invention.

According to one embodiment of the present invention, the portable gas burner has the advantage that a sufficient amount of air can be introduced into the first opening by having the first opening formed in the first tube spaced apart from the first end of the second tube. Consequently, even when submerged in cold liquid, the flame can be maintained.

According to one embodiment of the present invention, the portable gas burner has the effect that exhaust gases are discharged in a horizontal direction, protecting the user, the first tube, and the second tube from high-temperature exhaust gases. This is achieved by curving and extending the open portion of the exhaust pipe in a direction closer to the direction extending vertically from the outer diameter of the first tube to the third tube as the exhaust pipe goes upward.

Additionally, due to the outer surface of the third tube, which is composed of the first side, the second side, and the intervening space, the contact area between the outer surface of the third tube and the liquid is increased. This results in faster heat transfer from the inside of the third tube to the liquid, shortening the time it takes to heat the liquid.

Moreover, in one embodiment of the present invention, the portable gas burner provides a compact portable gas burner through the respective structures and their interconnection relationships of the first tube, the second tube, and the third tube.

In particular, by the length relationship between the first tube and the second tube, the formation of the first opening in the first tube, the opening at the top of the second tube, the combustion section of the third tube, and the exhaust pipe, the invention separates the incoming air and the outgoing air from mixing. This enhances safety during use by protecting the user from the discharged air.

Furthermore, in one embodiment of the present invention, the portable gas burner prevents the mixing of incoming air and outgoing exhaust gases by having an extension part formed higher than the third tube. The incoming air and the exhaust gases are not mixed in one of the first space or the second space.

According to one embodiment of the present invention, the portable gas burner has the advantage of using a partitioned section and a wider-diameter third tube at the top to heat the liquid. This allows for quicker heating of liquid contained in large containers. Moreover, it has the advantage of being able to be inserted and fixed inside the third tube without being relatively constrained by the sizes of the first tube and the second tube.

Additionally, in one embodiment of the present invention, a compact first tube, second tube, and third tube are used, allowing the invention to be used by submerging it in ordinary-sized containers such as cup ramen containers, soup bowls, or small paper cups. The portable gas burner of the present invention is a compact device for heating liquid directly when submerged, making it highly portable.

Furthermore, the fuel reservoir connected to the fuel connection of the first tube can be easily connected to readily available portable butane gas or similar products made in cans, making it convenient for outdoor use.

Furthermore, when ignition occurs at the bottom of the first tube, the ignited flame points downward from the bottom of the first tube. At this time, since the lower end of the first tube is made shorter than the lower end of the second tube, there is an advantage in that the necessary air for the flame generated at the bottom of the first tube is sufficiently supplied.

### BRIEF DESCRIPTION OF THE DIAGRAMS

Figure 1 and Figure 2 are perspective views illustrating a portable gas burner according to different embodiments of the present invention.
Figure 3 and Figure 4 are sectional views illustrating the portable gas burners of Figure 1 and Figure 2, respectively, arranged within a container.
Figures 5 through 9 each are sectional views illustrating portable gas burners according to different embodiments of the present invention.
Figure 10 is a perspective view illustrating a clamp portion as shown in Figure 9.
Figures 11a through 11c each are sectional views illustrating portable gas burners according to different embodiments of the present invention.
Figure 12 is a perspective view illustrating a clamp portion according to one embodiment of the present invention.
Figure 13 and Figure 14 each illustrate the coupling of the first tube and the second tube using the clamp portion shown in Figure 12, in perspective view and sectional view, respectively.
Figure 15 is a perspective view illustrating the separation or coupling of the first tube and the second tube using a holder.

### SPECIFICS OF THE INVENTION

The present invention can undergo various modifications and have several embodiments, and a specific embodiment is provided herein for illustrative and detailed description purposes. However, this is not intended to limit the present invention to a particular embodiment, and it should be understood to encompass all modifications, equivalents, or substitutes falling within the scope and spirit of the present invention.

The terminology used in the present invention is used for the purpose of describing particular embodiments and is not intended to limit the invention. Singular expressions include plural expressions unless the context clearly dictates otherwise. In the present invention, terms such as "include" or "have" indicate the presence of features, numbers, steps, operations, components, parts, or combinations thereof as set forth in the specification, not precluding the presence or possibility of one or more other features, numbers, steps, operations, components, parts, or combinations thereof.

Below, preferred embodiments of the present invention will be described in detail with reference to the accompanying diagrams. In this case, it should be noted that identical components in the accompanying diagrams are indicated by identical reference numerals whenever possible. Furthermore, detailed descriptions of functions and configurations that may obscure the gist of the present invention will be omitted. For the same reason, some components are exaggerated, omitted, or schematically depicted in the accompanying diagrams.

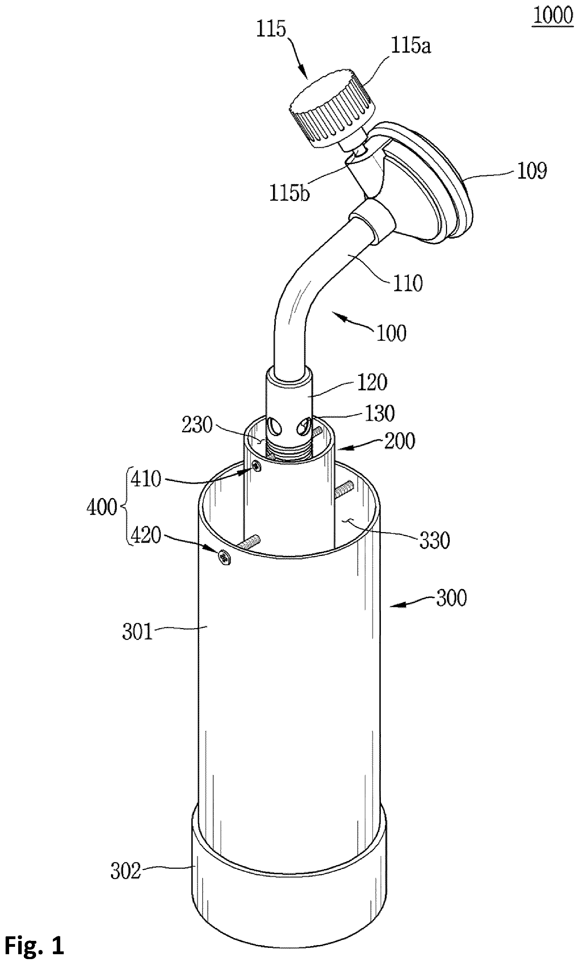

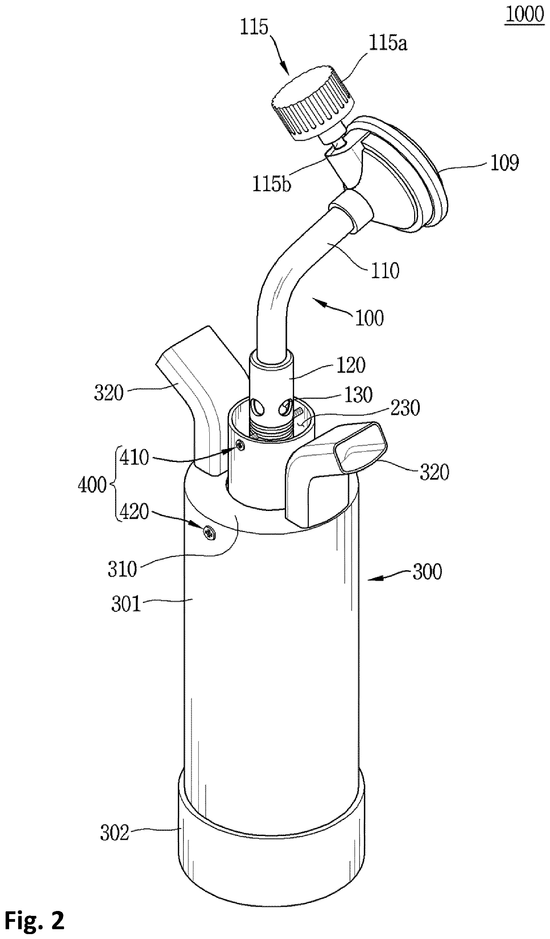

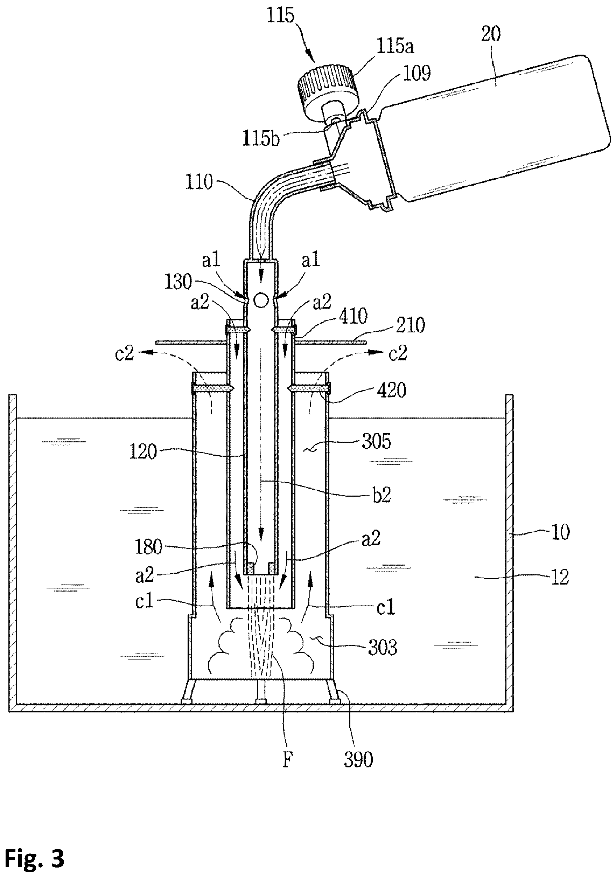

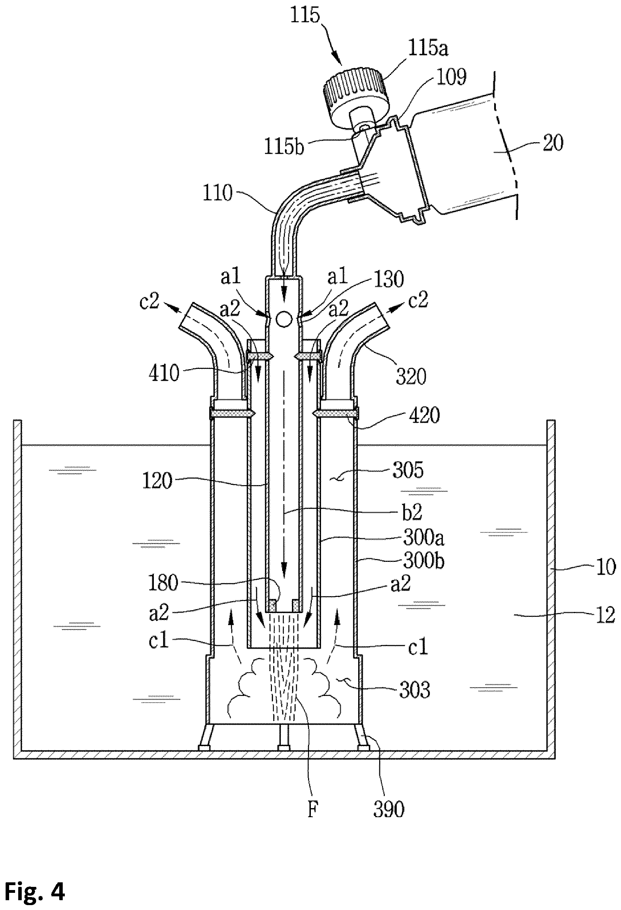

Figure 1 and Figure 2 are perspective views illustrating a portable gas burner (1000) according to different embodiments of the present invention. Figure 3 and Figure 4 are sectional views illustrating the portable gas burners (1000) of Figure 1 and Figure 2, respectively, arranged within a container (10).

According to one embodiment of the present invention, the portable gas burner (1000) is a device that submerges a heating portion, the third tube (300) of the portable gas burner (1000), into water (liquid (12)) contained in various containers (10), such as silicon containers (10) or Styrofoam containers (10), and directly heats the water (liquid (12)).

According to one embodiment of the present invention, the portable gas burner (1000) includes a first tube (100), a second tube (200), and a third tube (300).

The first tube (100) includes a fuel inlet unit (110) into which fuel is injected.

Specifically, referring to Figure 1, the first tube (100) includes a fuel inlet unit (110), a fuel connection part (109) connected to the top of the fuel inlet unit (110) and connected to a fuel reservoir (20), and a main tube (120) that extends downward from the bottom of the fuel inlet unit (110) and receives fuel from the fuel reservoir (20).

The fuel connection part (109) may include a flow control unit (115). Specifically, the flow control unit (115) may be disposed in an injection tube connected to the fuel inlet unit (110) of the first tube (100) to adjust the flow rate of gas introduced into the first tube (100). The flow control unit (115) may adjust the amount of fuel injected into the main tube (120) by adjusting the internal diameter of the inner tube located inside the fuel inlet unit (110) of the first tube (100).

The flow control unit (115) may be configured to control the flow rate of gas introduced into the first tube (100) by reducing the pressure inside the first tube (100) below atmospheric pressure to allow external air to flow into the first tube (100) through the first opening (130). The flow control unit (115) may include a control dial (115a) for adjusting the flow rate and a control shaft (115b) connected to the control dial (115a).

The fuel can be injected in gaseous form. Specifically, the fuel inside the fuel reservoir (20) may be in liquid (12) form, but when injected into the first tube (100), it may vaporize into gas and be injected into the first tube (100).

The main tube (120) extends to the lower portion of the fuel inlet unit (110). The main tube (120) may have a first opening (130) formed therein. An ignition device (180) for ignition may be disposed at the bottom of the main tube (120).

A first opening (130) that allows external air to flow into the first tube (100) and mix with the fuel injected from the first end may be formed adjacent to the first end to allow the fuel injected from the first end to mix with the air in the first tube (100). Specifically, a first opening (130) can be formed at the top of the main tube (120) of the first tube (100).

Specifically, referring to Figure 1 and Figure 3, one or more first openings (130) may be formed at the top of the main tube (120). External air is introduced into the first tube (100) through the first opening (130). The introduced air mixes with the fuel flowing through the first tube (100). The air and mixed fuel can be in a suitable condition for combustion.

In this case, the first opening (130) may be arranged to be spaced apart from the first end (201) of the second tube (200). This prevents insufficient air from being introduced into the first opening (130) due to the air introduced into the top of the second tube (200). In other words, by spacing the first opening (130) apart from the first end (201) of the second tube (200), sufficient air can be introduced into the first opening (130).

The first tube (100) includes an ignition device (180) disposed on the inner side of the lower end of the first tube (100) that ignites the combustion of the injected fuel.

Specifically, referring to Figure 3, the ignition device (180) is disposed on the inner side of the other end of the first tube (100). The ignition device (180) is configured to ignite a mixture of fuel and air flowing into the main tube (120) to generate a flame (F).

When the fuel discharged from the lower end of the first tube (100) is ignited by the aforementioned ignition device (180) of the first tube (100), the air introduced from the first end (201) of the second tube (200) serves as the necessary air for the combustion of the flame (F) generated at the lower end of the first tube (100). Thus, continuous combustion of the flame (F) at the lower end of the first tube (100) is possible.

On the other hand, the lower end of the first tube (100) may be shorter than the lower end (202) of the second tube (200).

Specifically, referring to Figure 3 and Figure 4, the lower end of the first tube (100), which is the lower end (100) of the first tube (100), may be shorter than the lower end (202) of the second tube (200). In this case, the lengths of the first tube (100) and the second tube (200) may be the same or similar to each other.

By making the lower end of the first tube (100) shorter than the lower end (202) of the second tube (200), additional air can be supplied smoothly when the fuel discharged from the lower end of the first tube (100) by the ignition device (180) is ignited.

Specifically, referring to Figure 3, when ignition occurs by the ignition device (180) at the lower end of the first tube (100), the ignited flame (F) progresses toward the bottom of the first tube (100). In this case, since the lower end of the first tube (100) is shorter than the lower end of the second tube (200), there is an advantage that sufficient air needed for the flame (F) generated at the lower end of the first tube (100) is supplied.

The second tube (200) can be connected to the first tube (100) or arranged to enclose the first tube (100) and may be configured in a tubular shape where the first end and the second end are communicative.

Specifically, as shown in Figure 1 and Figure 3, the second tube (200) is arranged to enclose the first tube (100). Moreover, the top and bottom of the second tube (200) are communicatively connected. Air is introduced from the top of the second tube (200), and the air needed for the flame (F) generated at the bottom of the first tube (100) can be supplied from the bottom of the second tube (200).

On the other hand, the second tube (200) can include a baffle (210) that protrudes from the outer side of the second tube (200) and covers the lower end (302) of the third tube (300).

Specifically, referring to Figure 3, the baffle (210) can be arranged to protrude from the top of the second tube (200) at an interval and be spaced apart from the top opening of the third tube (300). The baffle (210) reduces the intake of exhaust gas discharged from the third opening (330) of the third tube (300) into the upper portion of the second tube (200).

If exhaust gas is mixed with the air introduced at the top of the second tube (200), the air introduced at the top of the second tube (200) into the flame (F) ignited at the bottom of the first tube (100) may not be sufficient to sustain the flame (F). The baffle (210) has the effect of preventing exhaust gas from being mixed with the air introduced at the top of the second tube (200).

The distance between the outer diameter of the first tube (100) and the inner diameter of the second tube (200) can be from 1mm to 20mm. Specifically, referring to Figure 3, the ideal distance between the outer diameter of the main tube (120) of the first tube (100) and the inner side of the second tube (200) is from 1mm to 20mm.

When the distance between the outer diameter of the first tube (100) and the inner diameter of the second tube (200) is less than 1mm, the air (a2) flowing through between the first tube (100) and the second tube (200) may not be sufficient. Additionally, when the space between the first tube (100) and the second tube (200) is narrow, noise may be generated by the air flowing through between the first tube (100) and the second tube (200).

Furthermore, when the distance between the outer diameter of the first tube (100) and the inner diameter of the second tube (200) is greater than 20mm, it may be difficult to achieve the lightweight and compact design of the present invention. Moreover, increasing the distance between the first tube (100) and the second tube (200) may loosen the connection between them.

Therefore, it is desirable that the distance between the outer diameter of the first tube (100) and the inner diameter of the second tube (200) is from 1mm to 20mm.

The distance between the first end of the first tube (100) and the first end (201) of the second tube (200) can be from 20mm to 40mm. Referring to Figure 3, the distance between the first end, specifically the top of the main tube (120) of the first tube (100), and the first end (201) of the second tube (200), is desirable to be from 20mm to 40mm.

When the distance between the first end of the first tube (100) and the first end (201) of the second tube (200) is less than 20mm, there may not be sufficient space for the first opening (130) in the first tube (100). Additionally, there may not be enough space for the connection between the first tube (100) and the second tube (200).

If the distance between the first end of the first tube (100) and the first end (201) of the second tube (200) increases to more than 40mm, the path for the mixture of vaporized fuel and air to travel from the inside of the first tube (100) to the bottom of the first tube (100) may become too long to deliver a sufficient mixture of fuel and air to the bottom of the first tube (100).

The third tube (300) has an open first end and covers the lower end (202) of the second tube (200).

Specifically, referring to Figure 3, the first end (301) of the third tube (300) is open, and the lower end (302) of the third tube (300) is arranged to cover the lower end (202) of the second tube (200). The lower end (302) of the third tube (300) can be spaced apart from the lower end (202) of the second tube (200).

The flame (F) generated at the bottom of the first tube (100) burns between the bottom of the second tube (200) and the bottom of the third tube (300). The space between the bottom of the first tube (100) and the bottom of the third tube (300) where the flame (F) is generated can be referred to as a combustion zone (303).

Specifically, inside the third tube (300), a combustion zone (303) is formed. Inside the lower end (302) of the third tube (300), a combustion zone (303) is formed by igniting the fuel introduced from the first end of the first tube (100).

The flame (F) generated in the combustion zone (303) can be discharged externally along the space between the third tube (300) and the second tube (200). In other words, exhaust gas generated in the combustion zone (303) is discharged externally along the space between the third tube (300) and the second tube (200).

The high-temperature exhaust gas passing through the space between the third tube (300) and the second tube (200) can heat the inner side (300a) and outer side (300b) of the third tube (300). The bottom side and outer side (300b) of the heated third tube (300) exchange heat with the liquid (12) contained in the container (10), allowing the liquid (12) to be heated.

On the other hand, the third tube (300) can have a baffle (310).

Specifically, as shown in Figure 2, a baffle (310) can be formed at the top of the third tube (300). The baffle (310) is positioned at the first end (301) of the third tube (300) and is formed to cover the top of the third tube (300). The baffle (310) can prevent exhaust gas rising from the third tube (300) from being discharged upward.

Furthermore, the third tube (300) can include an exhaust duct (320) that protrudes from the top of the baffle (310). As shown in Figure 3, the exhaust duct (320) can protrude from the top of the baffle (310) and create a space for the combustion gases to be discharged.

The exhaust duct (320) can be formed with a curve. Specifically, as shown in Figure 2, the exhaust duct (320) can be curved towards the outer side of the third tube (300). Through the exhaust duct (320), gas burned in the portable gas burner (1000) can be discharged externally. By curving the exhaust duct (320) outward, it can prevent the high-temperature exhaust gas from being discharged upwards toward the fuel reservoir (20), the first tube (100), and the second tube (200).

On the other hand, the first end of the exhaust duct (320) can be spaced further apart from the first tube (100) and the second tube (200) as it goes upward.

Specifically, as shown in Figure 2, the exhaust duct (320) can be curved in a direction closer to the direction in which the open portion at the top extends vertically from the outer diameter of the first tube (100) to the outer diameter of the third tube (300) as it goes upward. Through this, the exhaust gases discharged through the exhaust duct (320) can be directed towards the first tube (100) and the second tube (200) or discharged horizontally rather than upwards. This can protect the user and the first tube (100) and second tube (200) from the high-temperature exhaust gases.

The third tube (300) can include a support portion (390) that extends from the lower end (302) of the third tube (300) protruding to the floor to support the third tube (300) against the floor.

Specifically, referring to Figure 3, a support portion (390) can extend from the lower end (302) of the third tube (300), which is the lower end (302) of the third tube (300), to the floor. The support portion (390) can allow the first tube (100) to the third tube (300) to be supported and fixed to the floor.

The support portion (390) can consist of three or more legs, each of which may be adjustable in length. Through this, the support portion (390) can maintain horizontal stability by adjusting the lengths of its legs, even if the bottom of the container (10) is not flat.

The lower end (302) of the third tube (300) can be positioned to allow the flame (F) ignited by the ignition device (180) of the first tube (100) to contact it and spread to both sides.

Specifically, referring to Figure 4, the ignited flame (F) generated by the ignition device (180) of the first tube (100) can contact the bottom surface of the third tube (300), and the position of the ignition device (180) of the first tube (100) and the distance between it and the lower end (302) of the third tube (300) can be adjusted to allow the contacted flame (F) to spread to both sides.

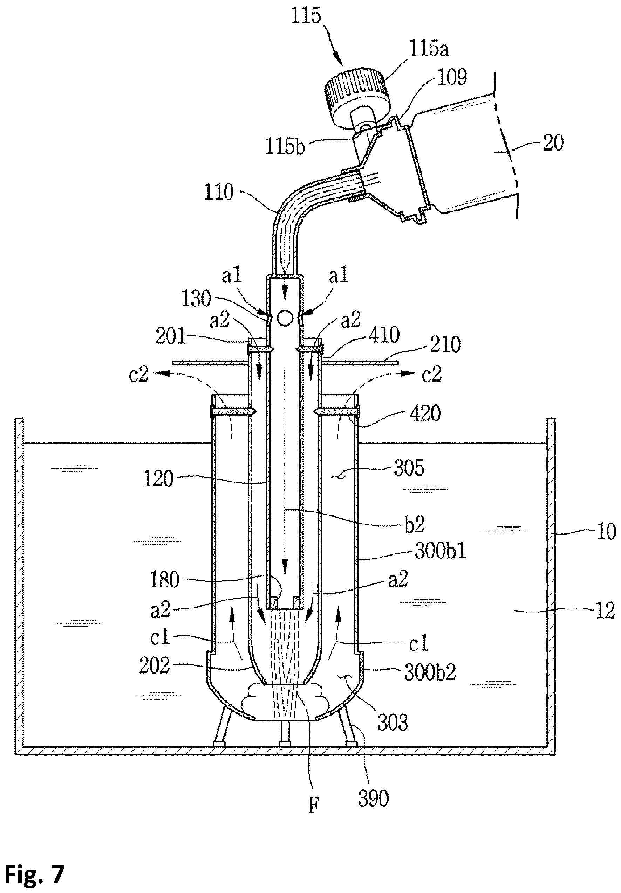

Additionally, as shown in Figure 7, the bottom surface of the third tube (300) that comes into contact with the flame (F) can be designed to facilitate spreading to both sides. The bottom surface of the third tube (300) can have a flat central portion and be curved upward towards both sides.

This allows the flame (F) generated inside the portable gas burner (1000) to effectively spread within the third tube (300), increasing the temperature inside the third tube (300), and the elevated temperature inside the third tube (300) can heat the liquid (12) filled in the container (10).

On the other hand, the first tube (100), second tube (200), and third tube (300) can be coupled to each other through coupling means (400).

Specifically, referring to Figures 1 and 3, the first tube (100) and second tube (200) can be coupled through a first coupling element (410). The first coupling element (410) can have bolts inserted into openings formed in the second tube (200), which are then secured by threads formed in the openings. By rotating the bolts, the second tube (200) and the first tube (100) can be coupled to each other. The bolts can be inserted and rotated into openings formed in the second tube (200) to apply pressure against the outer surface of the first tube (100).

Additionally, the coupling means (400) can further include a second coupling element (420) that couples the second tube (200) and the third tube (300) with features similar to the aforementioned first coupling element (410). The second coupling element (420) can have bolts inserted through openings formed in the third tube (300) and can be rotated to apply pressure against the outer surface of the second tube (200).

In this case, bolt-inserted fixed grooves (not shown) may be formed on the outer surfaces of the first tube (100) and the second tube (200) to increase the fixing force of the aforementioned bolts.

Below, referring to Figure 3, the flow of fuel, air, and exhaust gas is described as follows.

Through the fuel inlet unit (110), fuel can be injected from the fuel reservoir (20) into the main tube (120). The injected fuel can be vaporized fuel.

In the main tube (120), vaporized fuel injected through the fuel inlet unit (110) and air (a1) introduced through the first opening (130) can mix. For convenience, this can be referred to as the first inlet air (a1).

At this time, the fuel passing through the main tube (120) does not escape to the outside through the first opening (130). This is because the pressure inside the main tube (120) is lower than the external pressure, and according to Bernoulli's theorem, air from the outside is introduced through the first opening (130).

A gas (b2) in which fuel and air are mixed can flow into the lower part of the main tube (120). By the ignition device (180) arranged in the lower part of the main tube (120), the gas mixture of fuel and air can be ignited.

On the other hand, external air can be introduced through the upper opening of the second tube (200). For convenience, this can be referred to as the second inlet air (a2).

In cases where the mixture of fuel and air at the lower part of the main tube (120) is ignited by the ignition device (180) placed there, additional air may be required. The aforementioned second inlet air (a2) can be supplied to the ignited flame (F), allowing it to be sustained.

The flame (F) generated in the combustion zone (303) inside the third tube (300) can raise the temperature inside the portable gas burner (1000). Furthermore, the exhaust gas (c1) produced by combustion within the inner part of the third tube (300) can be discharged to the outside (c2) through the space between the second tube (200) and the third tube (300).

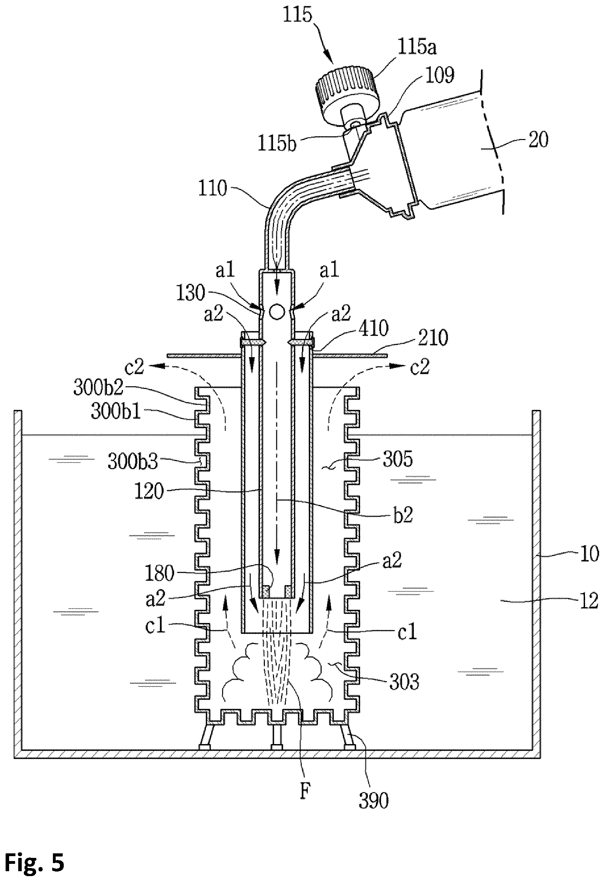

On the other hand, referring to Figure 4, the direction of exhaust gas discharged by the exhaust duct (320) can be controlled. Furthermore, referring to Figure 5, exhaust gas discharged by the baffle (210) can be prevented from pointing upwards.

According to one embodiment of the present invention, the portable gas burner (1000) provides a compact portable gas burner (1000) through the respective structures and coupling relationships of the first tube (100), the second tube (200), and the third tube (300). In particular, by configuring the lengths of the first tube (100) and the second tube (200), the first opening (130) formed in the first tube (100), the opening at the top of the second tube (200), the combustion zone (303) of the third tube (300), and the exhaust duct (320), the air drawn in and the air discharged can be separated while simultaneously enhancing user safety by protecting the user from the discharged air.

Furthermore, according to one embodiment of the present invention, the portable gas burner (1000) allows for use with ordinary-sized containers, such as cup ramen containers (10) or bowls, small paper cups, and the like, by using compact first tube (100), second tube (200), and third tube (300). The portable gas burner (1000) of the present invention has the advantage of being compact and can be used by immersing it directly in water (liquid (12)).

Additionally, a portable butane gas container or the like, which is easy to obtain in the market, can be connected to the fuel reservoir (20) connected to the fuel connection part (109) of the first tube (100), making it easy to use outdoors.

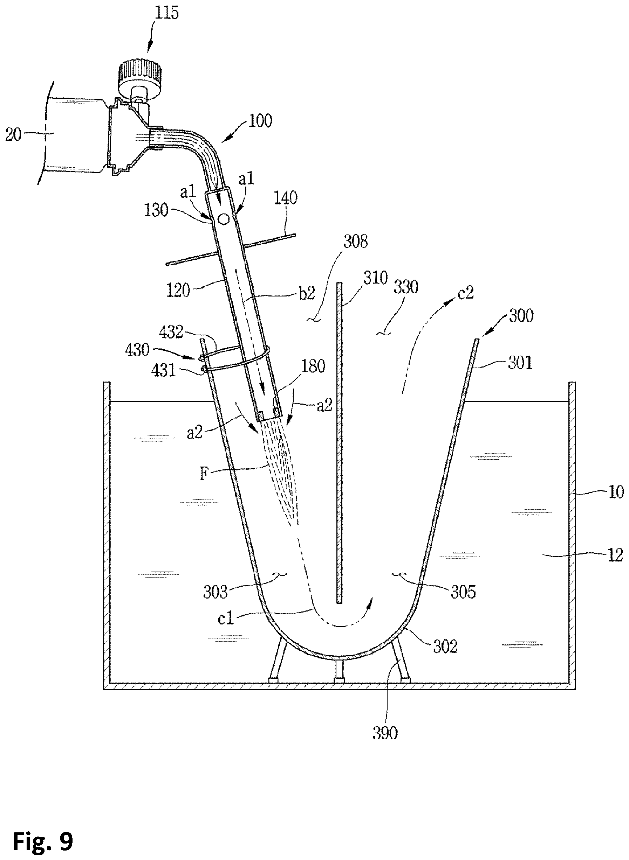

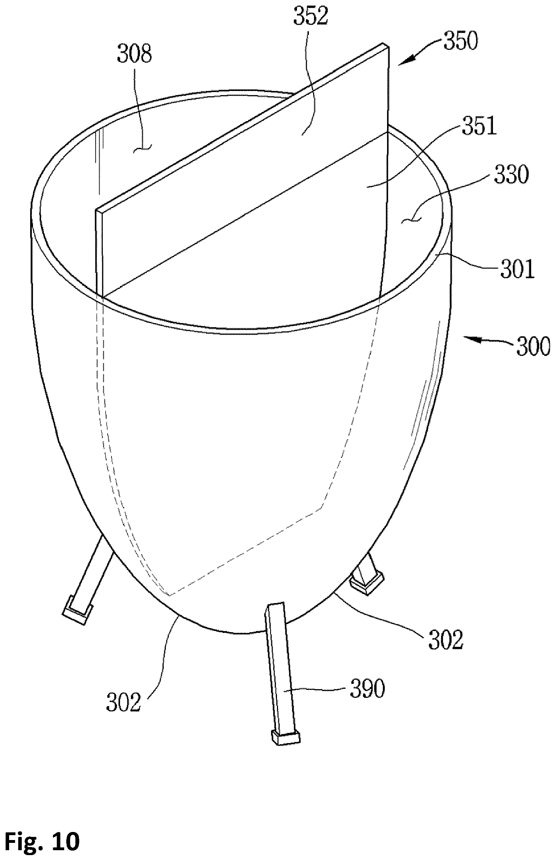

Figures 5 and 9 each show a cross-sectional view of a portable gas burner (1000) according to different embodiments of the present invention. Figure 10 is a perspective view showing the third tube (300) shown in Figure 9. Embodiments shown in Figures 5 and 9 have differences in the shape of the third tube (300), while other components are the same or similar to those in the previously described embodiments, so descriptions of the same or similar components are omitted.

According to one embodiment of the present invention, the third tube (300) of the portable gas burner (1000) can have a curved portion.

Specifically, the outer side (300b) of the third tube (300) can include one or more curved portions to increase the contact area with the external environment.

Referring to Figure 5, the curved portion of the outer side (300b) of the third tube (300) can include an outwardly projecting first side (300b1) and a recessed second side (300b2) disposed inwardly. A connecting surface connecting the first side (300b1) and the second side (300b2) is provided.

The curved portion can create a gap (300b3) between the first side (300b1) and the second side (300b2) due to the difference in the extent of protrusion of the first side (300b1) and the recessed second side (300b2). Depending on the inflow and outflow of the liquid (12) inside the container (10) in the gap (300b3), heat transfer from inside the third tube (300) to the liquid (12) inside the container (10) can occur at a faster rate. As a result, the liquid (12) inside the container (10) can be heated more quickly.

Due to the outer side (300b) of the third tube (300) composed of the first side (300b1), the second side (300b2), and the gap (300b3), the contact area between the outer side (300b) of the third tube (300) and the liquid (12) increases. This effect allows for faster transfer of heat within the third tube (300) to the liquid (12), thereby reducing the time required to heat the liquid (12).

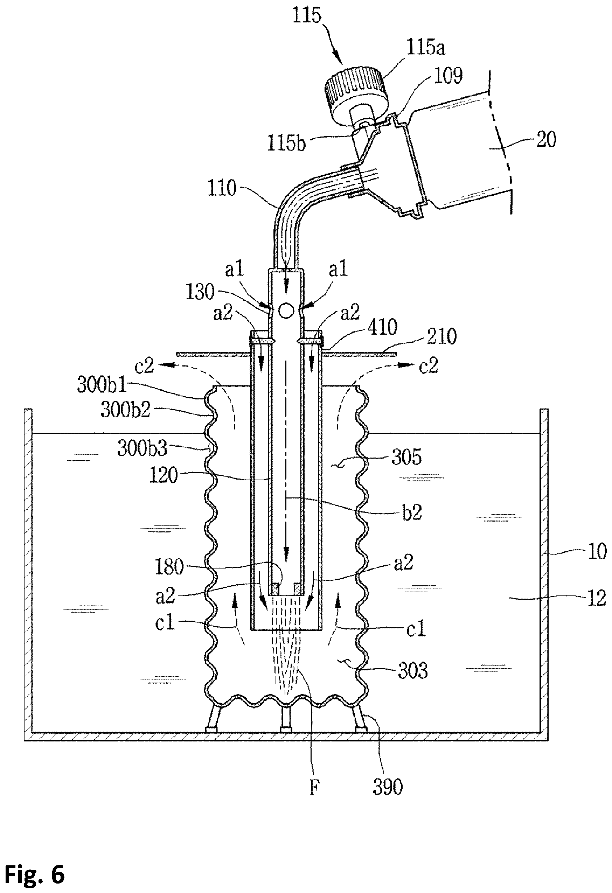

On the other hand, referring to Figure 6, the outer side (300b) of the third tube (300) can have a curved shape. Forming the outer side (300b) of the third tube (300) in a curved shape can make it easier to grip and store the third tube (300). Additionally, the liquid (12) that comes into contact with and heats the outer side (300b) of the third tube (300) can flow more smoothly.

Referring to Figure 7, instead of continuously curving the outer side (300b) of the third tube (300), only the bottom part of the third tube (300) can be formed wide. That is, the second side (300b2) at the bottom of the third tube (300) can protrude outward more than the first side (300b1), and the bottom part of the second side (300b2) can be curved. This curvature of the second side (300b2) allows the flame (F) that contacts the bottom surface of the third tube (300) to spread outward.

On the other hand, the lower end (202) of the second tube (200) can be formed to narrow as it goes further, creating a narrowing exhaust lower end. Additionally, the lower end (302) of the third tube (300) can be formed so that, as the flame entering from the lower end of the first tube (100) flows into the combustion zone (303) of the third tube (300), it disperses outward toward the outer circumference of the third tube (300) by gradually rising inward.

Specifically, referring to Figure 7, the lower end (202) of the second tube (200) can be formed to have a shorter diameter compared to other portions of the second tube (200). In other words, the lower end (202) of the second tube (200) can be formed to narrow as it goes toward the end.

Through this configuration, the mixed gas of fuel and air passing through the first tube (100) and the second tube (200) can be concentrated through the lower end (202) of the second tube (200). Furthermore, the flame (F) entering the third tube (300) can spread less widely, providing an advantage in increasing the intensity of the flame (F).

Additionally, by reducing the diameter of the lower end (202) of the second tube (200), the mixed gas of fuel and air can be concentrated. Ignition of the concentrated mixed gas with flame (F) can lead to a stable, concentrated, and powerful flame (F).

The second tube (200) and the third tube (300) can be curved and elongated.

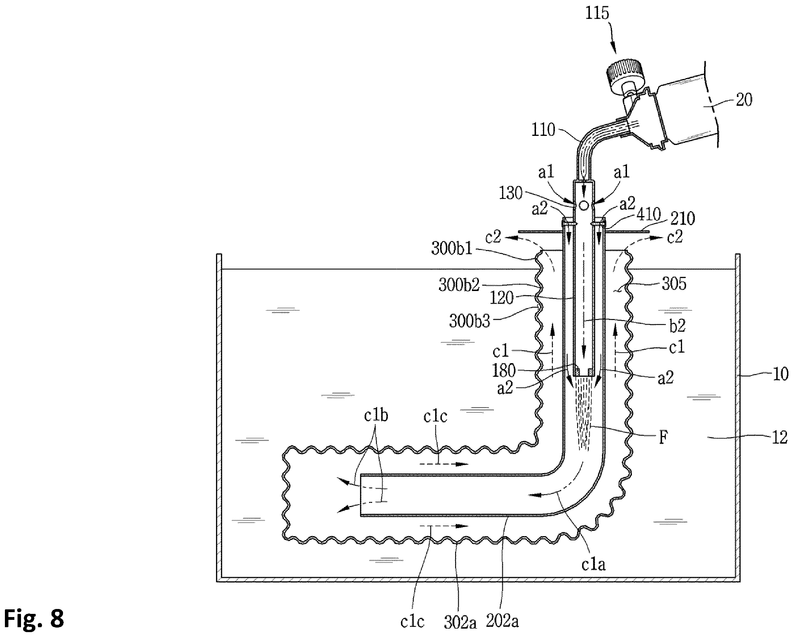

Specifically, referring to Figure 8, the lower end (302) of the third tube (300) can be curved and elongated in the direction extending from the first end (301) of the third tube (300) and in a vertical direction. In other words, an extension (302a) of the third tube (300) can be provided.

The third tube (300), which extends downward along the first tube (100), can also be curved and extended in a direction perpendicular to the extending direction. Additionally, the second tube (200) that is placed inside the third tube (300) can also be curved and extended in a direction corresponding to the third tube (300). In other words, an extension part (202a) of the second tube (200) can be provided.

With this structure, in an embodiment of the present invention, the portable gas burner (1000) can be used even with a container (10) having a wide bottom, allowing it to be submerged or used for submerged heating. Additionally, the increased contact surface area with the submerged liquid (12) allows for faster heating of the liquid (12).

In this case, the flame (F) generated at the bottom of the first tube (100) may not be discharged to the outer part of the second tube (200). However, the flame (F) generated at the bottom of the first tube (100) is expelled very quickly. Consequently, the exhaust gas (c1a) generated from the flame (F) is also expelled (c1b) very quickly in the same direction as the progress of the flame (F). Therefore, the exhaust gas can be expelled (c1b) through the extended part of the second tube (200) towards the third tube (300).

The exhaust gas (c1c) expelled into the third tube (300) can flow through the space between the second tube (200) and the third tube (300). The exhaust gas (c1) is expelled (c2) towards the top of the third tube (300).

Because the temperature of the exhaust gas is high, the third tube (300) can be heated by this exhaust gas. The heated third tube (300) can heat the liquid (12) through heat exchange. In this case, the outer side (300b) of the third tube (300) can have curved portions.

According to an embodiment of the present invention, the portable gas burner (1000) can have the second tube (200) and the third tube (300) extended horizontally, increasing the contact area with the liquid (12) contained in the wide container (10) and allowing for rapid heating.

Additionally, when the container (10) is large, there is an advantage in using the second tube (200) and the third tube (300), which are elongated and curved as described above, to quickly heat the liquid (12) contained in the large container (10).

Referring to Figures 9 and 10 below, another embodiment of the present invention will be explained below.

According to another embodiment of the present invention, the portable gas burner (1000) can include the first tube (100) and the third tube (300).

Specifically, referring to Figure 9, the first tube (100) includes a fuel inlet unit (110) where fuel is injected, and an ignition device (180) is arranged on the inner side of the lower end to cause combustion of the injected fuel. The third tube (300) has an open top, and the lower end can be curved.

The third tube (300) includes a partitioning part (350) that divides the interior space of the third tube (300) into two or more spaces.

Specifically, referring to Figures 9 and 10, the lower part of the partitioning part (350) arranged inside the third tube (300) communicates. Through the partitioning part (350), a combustion zone (303) where combustion occurs by igniting the fuel inflowing from the head of the first tube (100) is formed in the first space (308). The combustion gas generated by combustion is transferred to the second space (305) through the lower part of the partitioning part. The transferred exhaust gas (c1) is discharged (c2) through the third opening (330).

In this case, the second space (305) can be an exhaust section. The high-temperature exhaust gas transferred to the exhaust section can heat the third tube (300), and the heated third tube (300) can heat the liquid (12) contained in the container (10).

On the other hand, the first tube (100) can be coupled to the third tube (300) through a third coupling element (430). Specifically, the third coupling element (430) can include a string (432) that surrounds the first tube (100) and a fixing element (431) that fixes the string (432) from the outside of the third tube (300).

The first tube (100) can be coupled to the third tube (300) through the third coupling element (430), and the screen (140) formed on the first tube (100) can extend over the end of the third tube (300). With the screen (140) hung on the end of the third tube (300), the first tube (100) and the third tube (300) can be more securely coupled through the third coupling element (430).

Referring to Figure 10, the partitioning part (350) may include a partitioning surface (351) that divides the first space (308) and the second space (305) inside the third tube (300), and an extension part (352) that extends higher than the top of the third tube (300).

The first tube (100) can be placed in the first space (308) or the second space (305). The space opposite to where the first tube (100) is placed can become an exhaust space where exhaust gas is discharged.

By having the extension part formed higher than the third tube (300), air drawn into the first space (308) or the second space (305) and exhaust gas discharged from one of the first space (308) and the second space (305) may not mix with each other.

The third tube (300) can have a larger diameter at the top than at the bottom. Specifically, as shown in Figures 9 and 10, the diameter at the bottom of the third tube (300) can be smaller than the diameter at the top of the third tube (300).

In cases where the exhaust gas does not easily pass through the second space (305), exhaust gas can be discharged to the top of the first space (308), and in such cases, sufficient air may not be supplied to the flame (F), which may extinguish. However, in this invention, external air can be introduced into the top of the first space (308) through the aforementioned structure, allowing the flame (F) to continue burning by supplying air. Additionally, exhaust gas can be easily discharged into the second space (305).

According to an embodiment of the present invention, by utilizing the upper-diameter third tube (300) with the partitioning part (350), the liquid (12) can be heated more quickly in a large container (10). Furthermore, there is an advantage that it can be inserted and fixed inside the third tube (300) without being relatively restricted in size compared to the first tube (100).

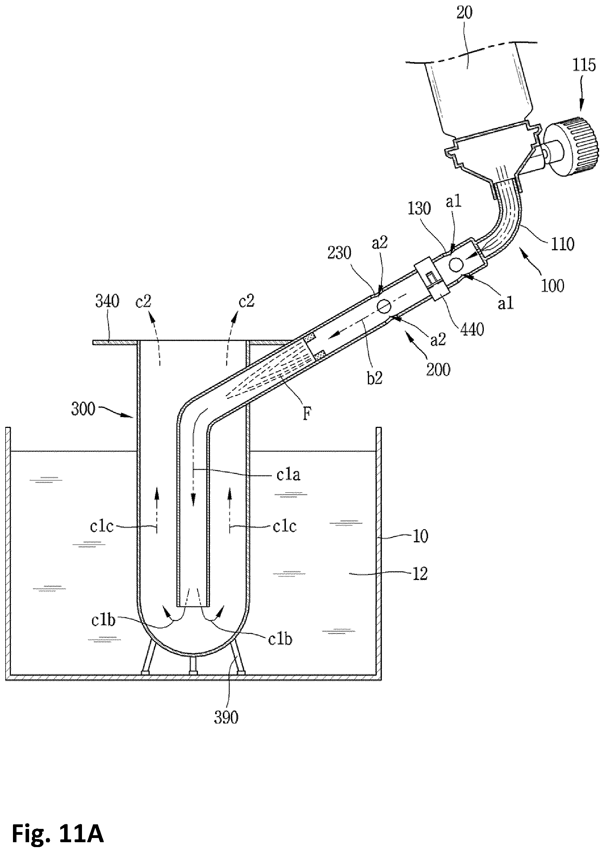

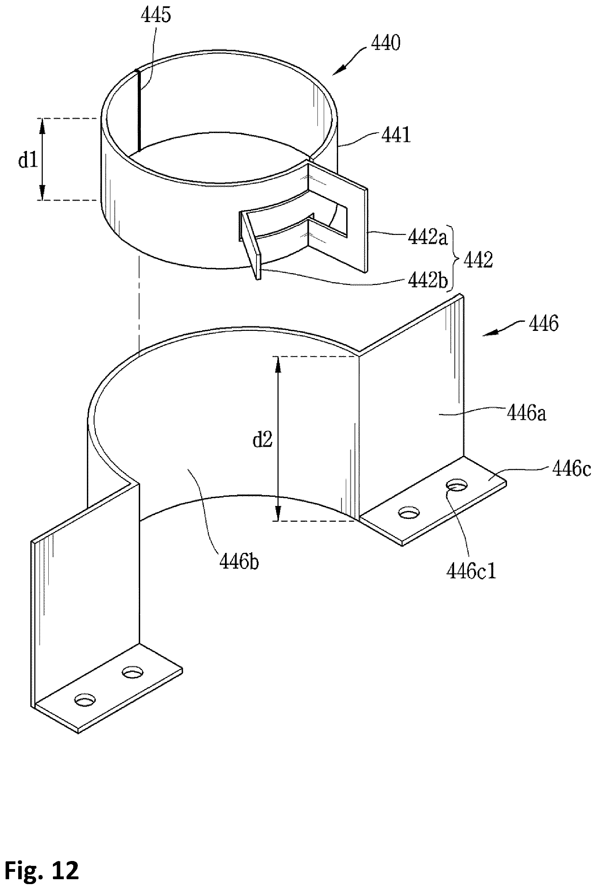

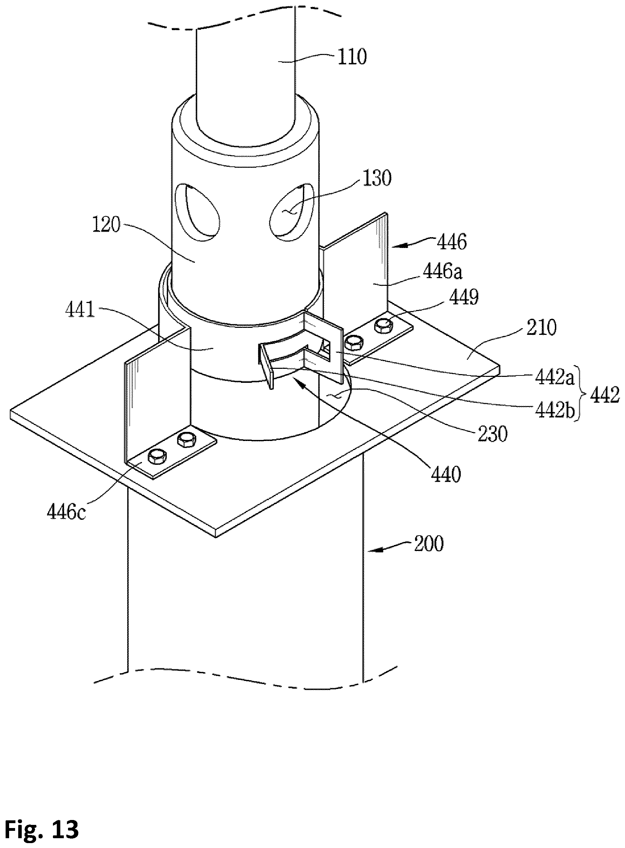

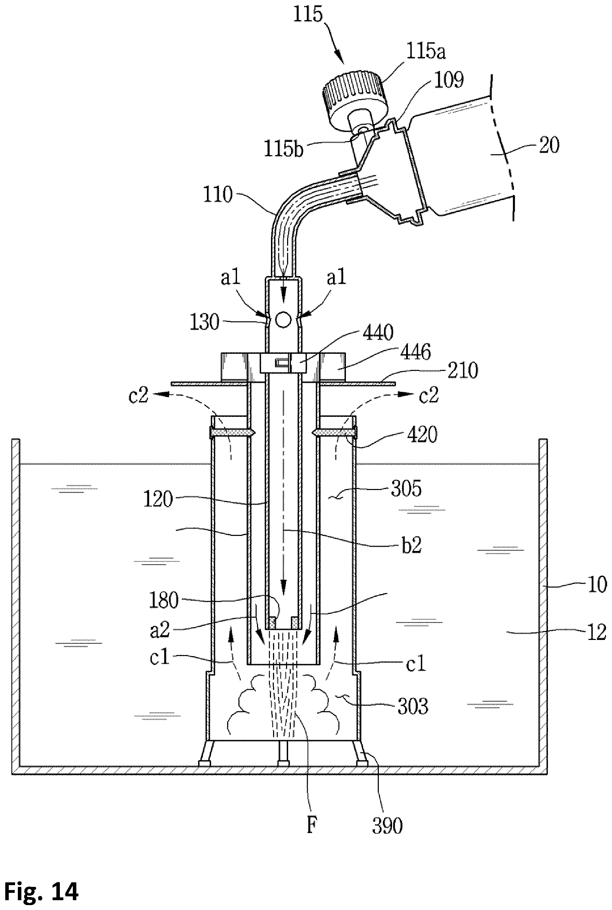

Figures 11a to 11c each depict cross-sectional views of the portable gas burner (1000) according to different embodiments of the present invention. Figure 12 is a perspective view showing a clamp unit (440) according to an embodiment of the present invention. Figures 13 and 14 each show perspective and cross-sectional views illustrating the coupling of the first tube (100) and the second tube (200) using the clamp unit (440) shown in Figure 12.

The embodiments shown in Figures 11a to 11c differ from the previous embodiment in the structure where the second tube (200) and the third tube (300) are coupled and/or the structure where the first tube (100) and the second tube (200) are coupled, while other components are the same or similar. Therefore, descriptions regarding these aspects are omitted.

Referring to Figure 11a, the portable gas burner (1000) according to another embodiment of the present invention includes the first tube (100), the second tube (200), and the third tube (300). The third tube (300) has an opening formed at the side top, through which the second tube (200) can penetrate. The second tube (200) is connected to the first tube (100) and extends from there, penetrating the side of the third tube (300) to extend toward the lower end (302) of the third tube (300).

The first tube (100) includes a fuel inlet unit (110) where fuel is injected, and an ignition device (180) is arranged on the inner side of the lower end to cause combustion of the injected fuel.

The second tube (200) can be connected to the first tube (100) or arranged to surround the first tube (100), forming a tubular shape where the head and tail are communicative. The second tube (200) is connected to the first tube (100) and extends from there, penetrating the side of the third tube (300) to extend toward the lower end (302) of the third tube (300).

The third tube (300) has an open top, and the lower end can surround the lower end (202) of the second tube (200).

In this case, an opening is formed at the side top of the third tube (300) through which the second tube (200) can penetrate. Specifically, an opening is formed at the side top of the third tube (300) through which the second tube (200) can penetrate and be wedged. At the top of the third tube (300), the second screen (340) can protrude on both sides. The second screen (340) can be configured to secure the third tube (300) or to fix the third tube (300) to the container (10).

Referring first to Figure 11a, an explanation of one embodiment is as follows.

The second tube (200) can be connected to the first tube (100). For example, as shown in Figure 11a, the first tube (100) and the second tube (200) can be connected to each other by a clamp unit (440).

The lower end of the first tube (100) and the upper end of the second tube (200) can be connected to each other through a clamp unit (440). In this case, as shown in Figure 11a, the first tube (100) can be formed short. Fuel can pass through the first tube (100), and fuel and external air can be mixed. External air can be introduced through the first opening (130) of the first tube (100). The gas mixture of fuel and external air flowing from the first tube (100) to the second tube (200) can have additional air introduced through the second opening (230) formed in the second tube (200).

In this embodiment, since the top of the second tube (200) is not open, a second opening (230) for introducing additional air necessary for additional combustion can be provided in the second tube (200). The second opening (230) can be arranged closer to the ignition device (180) than shown in the diagrams.

On the other hand, the second opening (230) in the second tube (200) is not always open but can be selectively opened or closed by an opening cover (231). When the opening cover (231) is in the open state, external air can be introduced, and when it is in the closed state, the introduction of external air can be blocked.

In this embodiment, the ignition device (180) can be located in the second tube (200). Specifically, as shown in Figure 11a, the ignition device (180) can be arranged in the middle of the second tube (200). In this case, the ignited flame (F) can partially enter the interior of the third tube (300).

Additionally, the exhaust gas generated by the flame (F) can flow into the interior of the third tube (300) along the second tube (200) due to the high temperature and high-speed combustion of the flame (F) in the same direction as the progress of the fuel.

The second tube (200) and the third tube (300) in the embodiment described in Figure 11a can be fixed to each other. The first tube (100) connected to the fuel reservoir (20) can be coupled to or detached from the second tube (200).

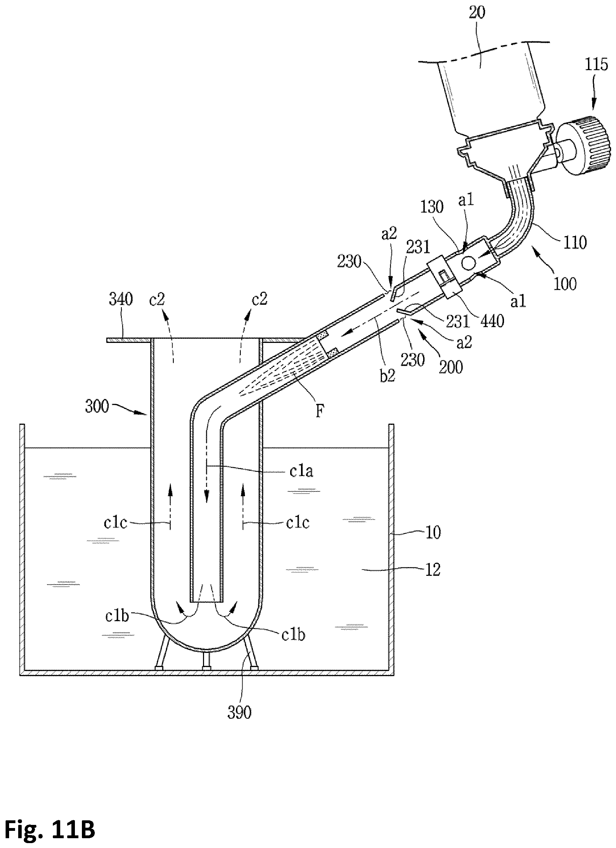

Next, referring to Figure 11b, an explanation for another embodiment is as follows.

In this embodiment, the first tube (100) can be inserted into the interior of the second tube (200) and the upper part of the first tube (100) can be coupled to the upper part of the second tube (200) by a clamp unit (440). The difference between this embodiment and the previous embodiment is that in the previous embodiment, the first tube (100) and the second tube (200) are connected to each other, whereas in this embodiment, a part of the first tube (100) is inserted into the interior of the second tube (200) and fixed.

The structure of the clamp unit (440) for coupling the first tube (100) and the second tube (200) in accordance with one embodiment of the present invention is as shown in Figure 12. It will be described in detail below.

According to one embodiment of the present invention, the portable gas burner (1000) may further include a clamp unit (440) for connecting the first tube (100) and the second tube (200).

Referring to Figures 12 and 13, the clamp unit (440) may include a first clamp (441) that secures the first tube (100) and a second clamp (446) that is coupled to and fixed to the second tube (200).

Referring to Figure 12, the first clamp (441) includes a clip portion (442). The clip portion (442) is movable by receiving force in opposite directions, securing space inside the first clamp (441). The clip portion (442) includes a first clip (442a) and a second clip (442b). The user can secure space inside the first clamp (441) for inserting the first tube (100) by applying force to bring the first clip (442a) and the second clip (442b) together in the direction of gathering.

Alternatively, space inside the first clamp (441) can be secured to allow the first tube (100) and the second tube (200) to be coupled together. For example, as shown in Figure 11a, when the first tube (100) and the second tube (200) are connected to each other, the first clamp (441) can be used to couple the first tube (100) and the second tube (200) together.

The first clamp (441) and the second clamp (446) can be welded together. Specifically, the first clamp (441) and the second clamp (446) can be welded to each other along a welding line (445) of the first clamp (441).

The height (d2) of the second clamp (446) can be longer than the height (d1) of the first clamp (441). Specifically, as shown in Figure 12, the height (d2) of the second clamp (446) can be longer than the height (d1) of the first clamp (441). This allows air to be introduced into the second tube (200) from the top when there is a height difference between the first clamp (441) and the second clamp (446), which can cool the first clamp (441) and the second clamp (446) by external air. In other words, excessive heating of the first clamp (441) and the second clamp (446) can be prevented due to the height difference between them.

The second clamp (446) can be formed in a rounded shape to engage with the first clamp (441) and includes a rounded portion (446b) that is rounded and extends vertically from both ends of the rounded portion (446b), wing portions (446a) that extend vertically from the rounded portion (446b) at the bottom of the wing portions (446a) and horizontal portions (446c) that extend in the direction vertical to the rounded portion (446b). Additionally, the second clamp (446) can be fixed to the baffle (210) formed in the second tube (200).

The first clamp (441) is welded and coupled to the rounded portion (446b). Except for the welding line (445), there may be no contact between the rounded portion (446b) and the first clamp (441), forming a space. Air circulates through this space, allowing the temperature of the first clamp (441) and the second clamp (446) to be reduced.

The wing portion (446a) may be formed to ensure stable fixation of the clamp unit (440). The wing portion (446a) provides a space where the horizontal portion (446c) is formed. The wing portion (446a) can separate the front and rear spaces of the wing portion (446a) from each other. This allows for adjusting the position of the wing portion (446a) to divide the opening formed at the top of the second tube (200) into two areas when necessary.

The horizontal portion (446c) can be fixed to the baffle (210) formed at the top of the second tube (200). Specifically, referring to Figures 12 and 13, the clamp unit (440) and the second tube (200) can be coupled through bolt (449) or the like through the opening hole (446c1) formed in the horizontal portion (446c).

The second tube (200) comprises a first body that is connected to the first tube (100), a second body that extends through the opening of the third tube (300) in the direction of its extension, and a third body that connects the first body and the second body, wherein the third body may be made to have elasticity.

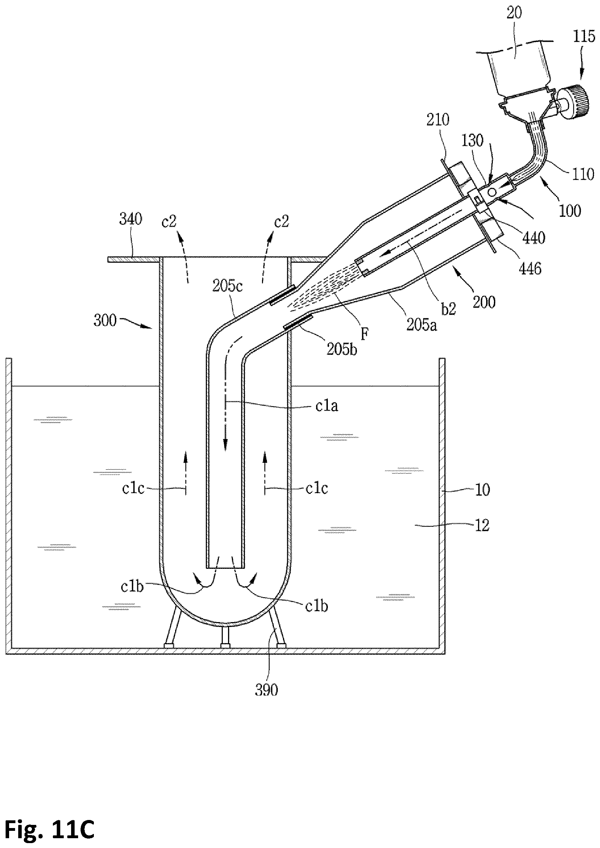

Specifically, referring to Figure 11c, the first body of the second tube (200) can be coupled to the first tube (100) through a clamp unit (440). As shown in Figures 13 and 14, the first clamp (441) of the clamp unit (440) is coupled to the first tube (100), and the second clamp (446) of the clamp unit (440) is coupled to the baffle (210) of the second tube (200).

The second body can extend through the opening of the third tube (300) in the same direction as the extension of the third tube (300). Specifically, as shown in Figure 11c, the second body can protrude a certain distance from the inner side of the third tube (300) to the outer side of the third tube (300) through the opening of the third tube (300).

The third body can be fitted in the area where the second body protrudes to the outer side of the third tube (300). The third body can be made of an elastic rubber material. The third body plays a role in allowing the first body and the second body to be easily coupled to each other. Specifically, the third body can be coupled within the end of the second body, and the first body can be fitted inside the third body.

However, in contrast to the above, the third body may not be provided. In such a case, the end of the second body can be formed of a material with elasticity, allowing the first body to be directly coupled to the end of the second body.

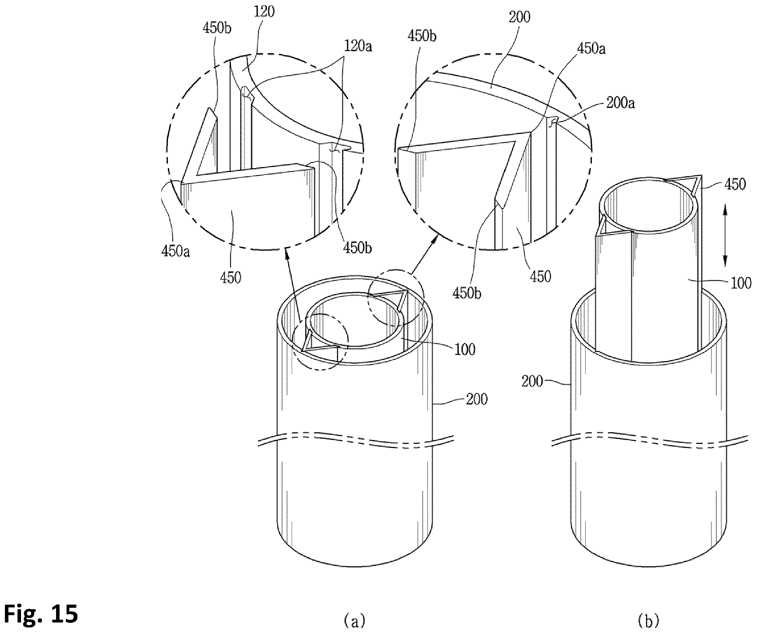

Figure 15 is a perspective view illustrating the coupling or separation of the first tube (100) and the second tube (200) using a holder (450).

According to one embodiment of the present invention, a portable gas burner may further include a holder (450) that is fitted between the first tube (100) and the second tube (200).

Specifically, referring to Figure 15, the holder (450) includes a front end (450a) of one holder (450) and a rear end (450b) of the holder (450) extending in opposite directions from the front end (450a). However, the shape of the holder (450) is not limited to this. The holder (450) can be formed in various shapes such as an H-shape or a circle.

Grooves in which the holder (450) can be fitted can be formed on the first tube (100) and the second tube (200).

Specifically, as shown in Figure 15, a first groove (120a) in which the rear end (450b) of the holder (450) can be fitted may be formed on the outer side of the first tube (100). To allow the rear end (450b) of the holder (450) to be fitted, the first groove (120a) may be formed at two spaced-apart locations.

A second groove (200a) in which the front end (450a) of the holder (450) can be fitted may be formed on the inner side of the second tube (200). The second groove (200a) can be formed at one location to allow the front end (450a) of the holder (450) to be fitted on the inner side of the second tube (200).

Furthermore, as shown in (a) of Figure 15, the first groove (120a) and the second groove (200a) may be formed at positions opposite to each other when two holders (450) are fitted. However, without limitation, when three or more holders (450) are arranged between the first tube (100) and the second tube (200), the first groove (120a) and the second groove (200a) can be formed at three or more locations.

As shown in (a) and (b) of Figure 15, when holders (450) are fitted between the first tube (100) and the second tube (200) and external force is applied at the top and bottom of the first tube (100) and the second tube (200), the first tube (100) can be pushed along with the holder (450), allowing the first tube (100) and the second tube (200) to be coupled or separated from each other.

According to one embodiment of the present invention, the portable gas burner (1000) can include a holder (450) fitted between the first tube (100) and the second tube (200), providing advantages of fixing the relative positions of the first tube (100) and the second tube (200) to each other or allowing for relative position changes using a simpler structure than one using bolts or nuts.

On the other hand, the fuel used in the portable gas burner of the present invention can include not only fuel contained in butane gas cylinders, but also liquefied fuel (such as gasoline or alcohol) contained in containers at similar pressures to atmospheric pressure. In such cases, the portable gas burner may also include a vaporization pipe that allows the liquid fuel, such as gasoline or alcohol, to pass through and vaporize.

In conclusion, while the embodiments of the present invention have been described, those skilled in the art will recognize that various modifications and changes can be made to the present invention by adding, changing, deleting, or substituting components without departing from the scope of the claims of the present invention, and these modifications and changes are also within the scope of the rights of the present invention.

### Overview of reference numbers:

F Flame a1 First inlet air
a2 Second inlet air
d2 Height of the second clamp
d1 Height of the first clamp
10 Container
12 Liquid
20 Fuel reservoir
1000 Portable gas burner
100 First tube
109 Fuel connection part
110 Fuel inlet unit
115 Flow control unit
115a Control dial
115b Control shaft
120 Main tube
120a First groove
130 First opening
140 Screen
180 Ignition device
200 Second tube
201 First end of the second tube
202 Lower end of the second tube
200a Second groove
202a Extension part of the second tube
210 Baffle
230 Second opening
300 Third tube
300a Inner side
300b Outer side
300b1 First side
300b2 Second side
300b3 Gap
301 First end of the third tube
302 Lower end of the third tube
302a Extension of the third tube
303 Combustion zone
305 Second space
308 First space
310 Baffle
320, 320' Exhaust duct
330 Third opening
340 Second screen
350 Partitioning part
351 Partitioning surface
352 Extension part
390 Support portion
400 Coupling means
410 First coupling element
420 Second coupling element
430 Third coupling element
431 Fixing element
432 String
440 Clamp unit
441 First clamp
442 Clip portion
442a First clip
442b Second clip
445 Welding line
446 Second clamp
446a Wing portion
446b Rounded portion
446c Horizontal portion
446c1 Opening hole
450 Holder
450a Front end of the holder
450b Rear end of the holder

## Claims

1. A portable gas burner comprising: a first tube in which a fuel injection unit is formed at one end and includes an ignition device for igniting the injected fuel, the first tube being connected to or arranged to encircle it; a second tube formed in a tubular shape in which one end is open, and the other end is configured to surround the other end of the second tube, and the second tube is connected to the first tube; a third tube formed to have an open end at the top of the side, allowing the second tube to penetrate, and the second tube, originating from the first end, extends through the side of the third tube towards the other end of the third tube, and at the inner side of the other end of the third tube, a combustion zone is formed by igniting the fuel flowing from the end of the first tube.

2. A portable gas burner, wherein, in Claim 1, the fuel is injected in a gaseous form, and in the first tube, a first opening is formed adjacent to the first end to enable the inflow of external air into the interior, thereby mixing with the fuel injected from the first end.

3. A portable gas burner, wherein, in Claim 2, the first opening is arranged to be spaced apart from the first end of the second tube.

4. A portable gas burner, wherein, in Claim 2, further comprising a flow control unit disposed in a supply tube connected to the fuel injection unit of the first tube to adjust the internal diameter of the tube that is injected into the fuel injection unit of the first tube in order to control the flow rate of the gas flowing from the first tube.

5. A portable gas burner, wherein, in Claim 4, the flow control unit is configured to adjust the flow rate of the gas entering the interior of the first tube through the first opening as the internal pressure within the first tube decreases below atmospheric pressure, thereby allowing external air to flow into the interior of the first tube through the first opening.

6. A portable gas burner, wherein, in Claim 1, the first end of the first tube is shorter than the first end of the second tube.

7. A portable gas burner, wherein, in Claim 6, when the fuel discharged from the first end of the first tube is ignited by the ignition device of the first tube, air inflowing from the first end of the second tube is introduced into the combustion occurring at the first end of the first tube.

8. A portable gas burner, wherein, in Claim 7, the second end of the third tube is arranged to allow the flame ignited by the ignition device of the first tube to contact and spread in both directions.

9. A portable gas burner, wherein, in Claim 8, the interior space of the third tube is configured to allow the combustion gas generated by the combustion in the combustion zone to be discharged.

10. A portable gas burner, wherein, in Claim 9, the outer surface of the third tube is provided with one or more protrusions to increase the contact area with the external environment.

11. A portable gas burner, wherein, in Claim 1, the distance between the outer diameter of the first tube and the inner diameter of the second tube is in the range of 1mm to 20mm.

12. A portable gas burner, wherein, in Claim 11, the distance between the first end of the first tube and the first end of the second tube is in the range of 20mm to 40mm.

13. A portable gas burner, wherein, in Claim 1, the second tube includes a baffle protruding from the outer surface of the second tube and arranged to cover the end of the third tube.

14. A portable gas burner, wherein, in Claim 1, a blocking plate is disposed at the first end of the third tube, and a discharge tube extending upward from the blocking plate to create a space for the discharge of combustion gas.

15. A portable gas burner, wherein, in Claim 10, the protrusion includes a first surface protruding outward; a second surface recessed and arranged inward; and a connecting surface connecting the first surface and the second surface, forming a space between the first surface and the second surface that allows the inflow and outflow of liquid.

16. A portable gas burner, wherein, in Claim 1, the third tube includes a support portion that extends from the end of the third tube, protruding and extending downward to support the third tube against the floor.

17. A portable gas burner, wherein, in Claim 1, the third tube includes an exhaust portion that narrows in width as it extends towards the end, and the end of the third tube is formed to rise inward towards the outer circumference as the flame generated at the end of the first tube and flowing into the combustion zone disperses outward towards the outer circumference of the third tube.

18. A portable gas burner, wherein, in Claim 1, the end of the third tube is bent and extended in a direction perpendicular to the direction in which it extends from the end of the third tube.

19. A portable gas burner comprising: a fuel injection unit formed on the first end where the fuel is injected, including the first tube equipped with an ignition device for igniting the injected fuel; the second tube, shaped in a tubular manner to establish communication between the first end and the second end, either by connecting to or surrounding the first tube; and the third tube, featuring an open first end and configured to enclose the opposite end of the second tube. The third tube incorporates a partition portion that divides the internal space of the third tube into two or more sections, with the lower part of the partition portion allowing communication. Within the first space delineated by the partition portion, the fuel flowing from the aforementioned first tube ignites to create a combustion zone, and the resulting combustion gas is conveyed to the second space through the lower part of the compartment's communication unit.

20. A portable gas burner comprising: a fuel injection unit formed on the first end where the fuel is injected, including the first tube equipped with an ignition device for igniting the injected fuel; the second tube formed in a tubular shape, either connected to or arranged to surround the first tube, allowing communication between the first end and the second end; and the third tube, featuring an open first end and configured to surround the other end of the second tube. The third tube includes a side upper opening allowing the second tube to penetrate, and the second tube, connected to the first tube at one end, extends from the first end and penetrates the side of the third tube, extending towards the end of the third tube.

21. A portable gas burner, wherein, in Claim 20, the second tube comprises: a first body connected to the first tube; a second body extending through the opening of the third tube; and a third body connecting the first body and the second body, wherein the third body is designed to have elasticity.

22. A portable gas burner, wherein, in Claim 1, further comprising a clamp unit connecting the first tube and the second tube, the clamp unit comprising: a first clamp fixed to the first tube; and a second clamp coupled to the first clamp and fixedly connected to the second tube.

23. A portable gas burner, wherein, in Claim 22, the first clamp includes a clip portion, and the clip portions receive opposing forces to move, creating space inside, comprising a first clip and a second clip, wherein the height of the second clamp is longer than the height of the first clamp.

24. A portable gas burner, wherein, in Claim 23, the second clamp is fixed to the shield formed in the second tube.

25. A portable gas burner, wherein, in Claim 1, further comprising a holder inserted between the first tube and the second tube, wherein a first groove is formed on the outer side of the first tube to accommodate the rear end of the holder, and a second groove is formed on the inner side of the second tube to accommodate the front end of the holder.
